# EUROPÄISCHE PATENTSCHRIFT

(11) **EP 1 777 161 B1**
(45) Veröffentlichungstag und Bekanntmachung des Hinweises auf die Patenterteilung: **23.07.2008**
(21) Anmeldenummer: 06022073.8
(22) Anmeldetag: 20.10.2006
(51) Int. Cl.: B65B 9/15, B65B 9/20, A22C 11/02

(54) **Vorrichtung zum Verpacken von fließ-oder rieselfähigem Füllgut**
Machine for packaging a free-flowing or pourable material
Machine pour emballer un produit fluide ou granuleux

(30) Priorität: 21.10.2005 DE 102005050614
(43) Veröffentlichungstag der Anmeldung: 25.04.2007
(73) Patentinhaber: Poly-clip System GmbH & Co. KG, 60489 Frankfurt am Main (DE)
(72) Erfinder: Töpfer, Klaus, 64572 Büttelborn (DE)
(74) Vertreter: Fritsche, Rainer

(56) Entgegenhaltungen:
- US-A1- 2005 053 699

## Beschreibung

Die Erfindung betrifft eine Vorrichtung zum Verpacken von fließ- oder rieselfähigem Füllgut in einer schlauchförmigen Verpackungshülle (kurz: Schlauchhülle) mit einem an eine Füllvorrichtung anschließbaren Füllrohr zum Leiten eines Stromes des Füllgutes von der Füllvorrichtung zu einer Verschließvorrichtung für die Verpackungshülle, welches einen Anschluss, eine Mündung, einen dem Anschluss benachbarten, im Wesentlichen geraden ersten Abschnitt mit einer ersten Längsachse und einen der Mündung benachbarten, mit dem ersten Abschnitt in Verbindung stehenden zweiten Abschnitt aufweist, wobei der erste Abschnitt eingerichtet ist, auf seinem Außenumfang einen in Form eines Folienbandes zugeführten und um den ersten Abschnitt herum geformten Folienschlauch als Verpackungshülle aufzunehmen und zu leiten, und der zweite Abschnitt eingerichtet ist, den aus Folienband geformten Folienschlauch weiter zu leiten oder einen zuvor von der Mündung her auf den zweiten Abschnitt aufgezogenen Vorrat an schlauchförmiger Verpackungshülle aufzunehmen und zu leiten.

Das Füllgut wird bekanntermaßen mittels der Füllvorrichtung unter Druck anschlussseitig in das Füllrohr eingebracht und in diesem zur Versschließvorrichtung transportiert oder geleitet. Auf der Außenseite trägt und leitet das Füllrohr die Schlauchhülle ebenfalls zur Versschließvorrichtung. Aus der nahe der Verschließvorrichtung befindlichen Mündung tritt das Füllgut aus dem Füllrohr aus und wird so in die zuvor mittels einer Verschlussklammer einseitig verschlossenen Schlauchhülle eingefüllt. Ist eine vorgegebene oder gewünschte Portionsgröße erreicht teilt die Verschließvorrichtung die gefüllte Schlauchhülle ab, indem sie diese mittels Einschnürelementen lokal zu einem Schlauchzopf einschnürt; eine Wurst entsteht. Im Bereich des Schlauchzopfes werden dann mittels Verschließwerkzeugen (Matrize und Stempel) in der Regel zwei axial versetzte Verschlussklammern um die Schlauchhülle gesetzt und verschlossen. Danach kann die Schlauchhülle mittels eines Messers zwischen den beiden Verschlusselementen durchtrennt werden.

Es ist ebenfalls bekannt, die für die Produktion von Würsten oder ähnlichen Portionspackungen benötigte Schlauchhülle an Ort und Stelle durch Längsnaht-Versiegeln eines zu der Schlauchhülle umgeformten Folienbandes kontinuierlich oder intermittierend mittels einer Siegeleinrichtung herzustellen. Aus der EP 0 908 103 A1 ist beispielsweise ein Siegelverfahren bekannt, bei dem das Folienband von einem Vorschubantrieb zunächst über eine Umformeinrichtung (Formschulter) und nachfolgend durch eine Siegeleinrichtung hindurch gezogen wird. Die Formschulter umgibt das Füllrohr umfänglich und auf einem axialen Abschnitt und formt das Folienband um das Füllrohr herum der Gestalt um, dass dessen Längskanten entweder auf Stoß oder überlappend aneinander angrenzen. Diese Längskanten werden einer der sich anschließenden Siegeleinrichtung im Fall des Überlappens direkt oder im Fall der Stoßverbindung mittels eines mit beiden Längskanten überlappenden Siegelbandes miteinander verbunden. Unter Siegeln ist hierbei jede Art des (unlösbaren) Verbindens der beiden Längskanten des Folienbandes zu verstehen, worunter beispielsweise das Schweißen als bevorzugtes Siegelverfahren aber auch das Kleben oder dergleichen fällt.

Der auf diese Weise gebildete, quasi endlose Folienschlauch wird von den Vorschubantrieben weiter stromabwärts in einen Abschnitt auf dem Füllrohr gefördert, in dem der Folienschlauch sich harmonikaartig zu einem Vorrat faltet. Ein Vorrat ist notwendig, wenn der Abfüllvorgang intermittierend und der Siegelvorgang kontinuierlich oder intermittierend, jedenfalls aber langsamer als der Abfüllvorgang und damit das durch den Füllausstoß bedingte Abziehen des Folienschlauches von dem Füllrohr erfolgt.

Andere Siegeleinrichtungen sind bekannt, die keinen Vorschubantrieb benötigen, weil kein Folienschlauchvorrat aufgestaut wird. Bei diesen Einrichtungen wird der Folienschlauch synchron zum Abfüllvorgang in den Füllpausen gesiegelt. Während des Füllens, wird der Folienschlauch unmittelbar durch den Füllgutausstoß nachgezogen und der Siegelvorgang unterbrochen.

Sehr viel länger noch ist es bekannt, die für die Produktion von Würsten benötigte Schlauchhülle mündungsseitig in Form eines beispielsweise ziehharmonikaartig gefalteten, vorgefertigten Vorrats (manuell) auf das Füllrohr aufzuziehen. Von diesem Vorrat wird gegen eine Reibungskraft eines sogenannten Bremsrings einer Rückhaltevorrichtung die benötigte Länge an Schlauchhülle durch den Füllgutausstoß abgezogen. Wenn der Vorrat aufgebraucht ist, muss er erneuert werden. Hierzu wird das Füllrohr aus seiner Betriebs- oder Abfüllstellung herausgeschwenkt, um die Mündung zum Aufziehen eines neuen Vorrats freizugeben. Diese Art der Bestückung des Füllrohres mit Schlauchhüllenmaterial findet auch heute noch Anwendung, beispielsweise bei Verwendung von Naturdärmen oder im Fall der Herstellung kleinerer Chargen mit wechselnden Wurstkalibern, in welchem die kontinuierliche Schlauchherstellung aus einem Folienband nicht rentabel ist.

Wünschenswert ist es, eine Vorrichtung zum Verpacken von fließfähigem Füllgut in einer schlauchförmigen Verpackungshülle zu haben, welche in einem ersten Betriebsmodus die Herstellung einer quasi endlosen Verpackungshülle an Ort und Stelle erlaubt (automatischer Betriebsmodus) und in einem zweiten Betriebsmodus das (manuelle) Aufziehen eines Vorrats einer schlauchförmigen Verpackungshülle (manueller Betriebsmodus) ermöglicht. Eine solche Vorrichtung, wie eingangs beschrieben, ist aus der US 2005/0053699 A1 bekannt. Sie weist ein erstes Füllrohr für den ersten Betriebsmodus auf, welches mit dem ersten Abschnitt innerhalb eines Gehäuse der Siegeleinrichtung verläuft. Über diesem ersten Füllrohrabschnitt wird das Folienband zu dem Folienschlauch umgeformt und versiegelt. Der zweite Abschnitt des Füllrohres ragt um eine bestimmte Länge aus der Schweiß- oder Siegeleinrichtung heraus und führt sowohl den gebildeten Folienschlauch als auch das im Inneren des Füllrohres transportierte Füllgut hin zur mündungsseitig angeordneten Verschließvorrichtung.

Das erste Füllrohr ist lösbar an dem Gehäuse der Siegeleinrichtung angeordnet und kann für den zweiten Betriebsmodus durch eine zweite Füllrohranordnung ausgetauscht werden. Die zweite Füllrohranordnung besteht aus einem ersten Füllrohrabschnitt, welcher sich durch das Gehäuse der im zweiten Betriebsmodus inaktiven Siegeleinrichtung erstreckt. Die zweite Füllrohranordnung weist an dem ersten Füllrohrabschnitt außerhalb des Gehäuses angeflanscht einen zweiten Füllrohrabschnitt auf. Der zweite Füllrohrabschnitt weist ein Kugelgelenk auf und ist dadurch gegenüber dem ersten Füllrohrabschnitt schwenkbar ausgebildet. Der zweite Füllrohrabschnitt der zweiten Füllrohranordnung hat eine dem zweiten Füllrohrabschnitt der ersten Füllrohranordnung entsprechende Länge. Mündet der zweite Füllrohrabschnitt der zweiten Füllrohranordnung im Wirkbereich der Verschließvorrichtung (Betriebsstellung der zweiten Füllrohanordnung) sind der erste und der zweite Füllrohabschnitt ferner koaxial angeordnet. So ist sichergestellt, dass die Abstände und Positionen der Füllvorrichtung, der Siegeleinrichtung und der Verschließvorrichtung nicht verändert werden müssen, wenn der Betriebsmodus umgestellt wird. Wird der zweite Füllrohrabschnitt der zweiten Füllrohranordnung aus seiner Betriebsstellung heraus geschwenkt, kann er in dieser abgeschwenkten Bevorratungsstellung mündungsseitig manuell mit einem Schlauchhüllenvorrat bestückt werden. Anschließend wird das Füllrohr wieder in seine Betriebsstellung nahe der Verschließvorrichtung zurückgeschwenkt.

Aufgabe der vorliegenden Erfindung ist es, eine Vorrichtung der eingangs genannten Art zu schaffen, welche leichter in der Handhabung und einfacher in ihrem Aufbau ist.

Die Aufgabe wird bei einer Vorrichtung der eingangs genannten Art dadurch gelöst, dass das Füllrohr stromaufwärts vor dem ersten Abschnitt eine Füllrohrdrehlagerung um die erste Längsachse und zwischen dem ersten und dem zweiten Abschnitt wenigstens eine Richtungsänderung aufweist.

Erfindungsgemäß kann somit im Gegensatz zu der aus der US 2005/0053699 A1 bekannten Vorrichtung dasselbe Füllrohr entweder zusammen mit der Siegeleinrichtung in dem ersten Betriebsmodus oder (manuell) bestückbar im zweiten Betriebsmodus betrieben werden. Im ersten Betriebsmodus wird Folienband im Bereich des ersten Füllrohrabschnitts zugeführt und zu einem dem Folienschlauch umgeformt und versiegelt. Der endlose Folienschlauch wird dann entlang dem ersten Abschnitt und weiter über den zweiten Abschnitt zur Mündung und der sich daran anschließenden Verschließvorrichtung geleitet.

Soll der Betrieb auf manuelle Bestückung des Füllrohres mit einem Schlauchhüllenvorrat und/oder Netzmaterial umgestellt werden, so erlaubt die Füllrohrdrehlagerung, dass das gesamte Füllrohr um die erste Längsachse des ersten Abschnitts geschwenkt werden kann, wodurch der zweite Abschnitt aufgrund der Richtungsänderung, die im Gegensatz zu der zweiten Füllrohranordnung der bekannten Vorrichtung permanent und nicht schwenkbar variabel ist, aus dem Wirkbereich der sich daran anschließenden Verschließvorrichtung, also aus seiner Betriebsstellung in die Bevorratungsstellung abschwenkt wird. So kann der Vorrat schlauchförmiger Verpackungshülle mündungsseitig auf den zweiten Abschnitt aufgezogen werden und anschließend das Füllrohr wiederum insgesamt um die Längsachse des ersten Füllrohrabschnitts in die Betriebsstellung zurückgeschwenkt werden.

Die erfindungsgemäße Vorrichtung erlaubt somit ein Umstellen der Betriebsmodi von der Zuführung eines quasi endlosen Folienschlauches auf eine manuelle Bestückung mit Verpackungsmaterial (Verpackungshülle und/oder Netzmaterial), ohne dass das Füllrohr ganz oder teilweise ausgetauscht oder demontiert werden muss. Die Verwendung eines einzigen, universellen Füllrohres erleichtert die Handhabung der Vorrichtung und spart ferner den Einsatz eines Kugelgelenks zum Abschwenken eines Teilbereichs des Füllrohres.

Die Richtungsänderung ist im Gegensatz zu der zweiten Füllrohranordnung der bekannten Vorrichtung permanent. Dies ermöglicht, dass das gesamte Füllrohr bestehend aus einem ersten und zweiten Abschnitt bevorzugt einstückig ausgeführt werden kann. Diese Ausführungsform hat den Vorteil einer erhöhten Eigenstabilität des Füllrohres und zugleich einer kostengünstigen Herstellung durch Abkröpfen eines geraden Rohres.

In einer leicht herzustellenden Ausführungsform ist der zweite Füllrohrabschnitt im Wesentlichen gerade ausgebildet und weist eine zweite Längsachse auf, die mit der ersten Längsachse des ersten Füllrohrsabschnitts einen Winkel < 180° einschließt. Die beiden Achsen verlaufen mit anderen Worten nicht parallel, wodurch die permanente Richtungsänderung beschrieben wird.

In einer anderen Ausführungsform, in der der zweite Füllrohrabschnitt im Wesentlichen ebenfalls gerade ist und eine zweite Längsachse aufweist, sind der erste und zweite Füllrohrabschnitt durch einen Zwischenabschnitt so verbunden, dass die erste und zweite Längsachse zwar parallel aber beabstandet zu einander verlaufen. In diesem Fall weist das Füllrohr insgesamt zwei Richtungsänderung auf, nämlich eine zwischen dem ersten Füllrohrabschnitt und dem Zwischenabschnitt und eine zweite zwischen dem Zwischenabschnitt und dem zweiten Füllrohrabschnitt. Diese Ausführungsform hat den Vorteil, dass die Siegeleinrichtung einerseits und die sich an das Füllrohr anschließende Verschließvorrichtung andererseits parallel zueinander ausgerichtet sein können, wohingegen im Fall der zuvor geschilderten Ausführungsform aufgrund des Winkels zwischen dem ersten Füllrohrabschnitt und dem zweiten Füllrohrabschnitt ebenfalls ein Winkel zwischen den beiden Vorrichtungen vorgesehen werden muss. Dies ermöglicht eine andere Aufstellung und Ausrichtung der Vorrichtungen zueinander, wodurch sich für den Anwender eine größere Vielfalt der Raumaufteilung ergibt.

In einer bevorzugten Ausführungsform weist die Vorrichtung eine das Füllrohr im Bereich des zweiten Abschnitts zumindest teilweise umgebende Netzhalterung mit einer um die erste Längsachse wirksamen Netzhalterdrehlagerung auf.

Manche Wurstprodukte sind zusätzlich zu der Schlauchhülle zu Stabilitätszwecken oder aus optisch-ästhetischen Gründen von einem Netz umgeben. Für deren Herstellung wird gleichzeitig mit dem Abziehen der Schlauchhülle beim Füllvorgang vom Füllrohr ein Netz von einem außenliegenden Halter abgezogen. Dieses Verfahren und Vorrichtungen hierfür sind bekannt. Nur sind diese nicht mit einem abschwenkbaren Füllrohr und erst recht nicht mit einer Vorrichtung der aus der US 2005/0053699 A1 bekannten Art kombinierbar.

Die Erfindung schafft nun Abhilfe, indem die Netzhalterung an einer um die erste Längsachse wirksamen Netzhalterdrehlagerung angeordnet ist. Dieser unabhängige Erfindungsaspekt erlaubt eine Schwenkbewegung um dieselbe Rotationsachse, um die auch das Füllrohr geschwenkt wird. Obgleich also der zweite Füllrohrabschnitt aufgrund der Richtungsänderung(en) eine Schwenkbewegung ausführt, kann der diesen Abschnitt zumindest teilweise umgebende Netzhalter der Schwenkbewegung folgen und muss nicht etwa bei Abschwenken in die Bevorratungsstellung vollständig abgenommen werden. Dies erlaubt ein Bestücken des Netzhalters mit Netzen und im Übrigen auch die Zuführung von Netzen in beiden Betriebsmodi.

Die Füllrohrdrehlagerung wird bevorzugt dadurch realisiert, dass die Vorrichtung eine Tragstruktur aufweist, an der ein erstes Element der Füllrohrdrehlagerung des Füllrohrs angeordnet ist, wobei das Füllrohr mit einem zweiten Element der Füllrohrdrehlagerung verbindbar ist.

Das Füllrohr weist in einer vorteilhaften Ausgestaltung einen stromaufwärts vor dem ersten Abschnitt liegenden und zu diesem koaxialen Ansatz auf, der in das erste Element der Füllrohrdrehlagerung einsteckbar ist und durch eine Klemmung mit dem zweiten Element der Füllrohrdrehlagerung lösbar verbindbar ist. Hierdurch kann das Füllrohr beispielweise zu Wartungs- oder Reinigungszwecken einfach demontiert und anschließend wieder montiert werden.

Der Ansatz des Füllrohrs ist bevorzugt außenumfänglich gegen das erste Element der Drehverbindung abgedichtet. Dies verhindert, dass das Füllgut, welches üblicherweise unter Druck aus der Füllvorrichtung in das Füllrohr eingeleitet wird, in die Füllrohrdrehlagerung eindringen kann.

Vorteilhaft ist es, wenn das erste Element der Füllrohrdrehlagerung einen Flansch zur Verbindung mit der Füllvorrichtung aufweist. In diesem Fall ist die Füllrohrdrehlagerung und der Anschluss des Füllrohres in einem Element vereint.

In einer vorteilhaften Weiterbildung umgibt das Füllrohr im Bereich des ersten Abschnitts eine Formschulter zum Umformen des zugeführten Folienbandes zu einem Folienschlauch, so dass Längskanten des Folienbandes benachbart zueinander zu liegen kommen, und weist eine im Bereich des ersten Abschnitts, stromabwärts der Umformeinrichtung angeordnete Schweiß- oder Siegeleinrichtung zum Schweißen oder Siegeln der nach dem Umformen benachbarten Längskanten entlang des Füllrohres auf. Dabei können die Längskanten des Folienbandes auf Stoß nebeneinander zu liegen kommen und mittels eines zusätzlichen Siegelbandes verbunden werden oder überlappend übereinander zu liegen kommen und unmittelbar miteinander versiegelt werden.

Bevorzugt weist die Schweiß- oder Siegeleinrichtung ein diese umgebendes Gehäuse auf, welches sogleich die Tragstruktur für die Füllrohrdrehlagerung bildet, wobei das erste Element der Füllrohrdrehlagerung das Gehäuse durchsetzt, d.h. aus diesem heraustritt. Hierdurch ist der Flansch zur Verbindung mit der Füllvorrichtung ohne öffnen des Gehäuses frei von außen zugänglich.

Das Füllrohr wird gemäß einer vorteilhaften Ausgestaltung der Erfindung im Bereich des ersten Abschnitts stromabwärts der Siegeleinrichtung von wenigstens einem Rollkörper unterstützt. Hierdurch wird die Füllrohrdrehlagerung teilweise von dem durch die Länge des Füllrohres bedingten Moment entlastet.

Bevorzugt greifen wenigsten zwei Rollkörper angular versetzt unterstützend an dem Füllrohr an. Auf diese Weise wird das Füllrohr zusätzlich geführt, was die auf die Füllrohrdrehlagerung wirkenden Momente weiter verringert.

Die Rollkörper sind bevorzugt um Achsen drehbar gelagert, die ihrerseits zwischen einer ersten Stellung senkrecht, V-förmig angestellt zur ersten Längsachse des ersten Füllrohrabschnitts und einer zweiten Stellung parallel zur ersten Längsachse des ersten Füllrohrabschnitts schwenkbar sind.

Im ersten Betriebsmodus, in welchem der quasi endlose Folienschlauch über den ersten Füllrohrabschnitt geleitet wird, sorgt die senkrechte Orientierung der Rollkörperachsen zur Längsachse des ersten Füllrohrabschnitts dafür, dass der zwischen den Rollkörpern und dem Füllrohr hindurchgezogene Folienschlauch keinen Reibungswiderstand an dem Rollkörper erfährt. Im zweiten Betriebsmodus, in welchem der Vorrat einer schlauchförmigen Verpackungshülle mündungsseitig nur auf den zweiten Füllrohrabschnitt aufgezogen wird, kommt die Schlauchhülle nicht mit den Rollkörpern in Kontakt. Die Achsen der Rollkörper können daher parallel zur ersten Längsachse des ersten Füllrohrabschnitts ausgerichtet werden und ermöglichen daher eine nahezu reibungsfreie Drehung des Füllrohres um die ersten Längsachse.

Die Vorrichtung weist bevorzugt einen Antrieb zur Drehung des Füllrohres um die erste Längsachse auf mit einem Antriebsmotor, einem mit dem ersten Abschnitt verbundenen ersten Getriebeelement und einem mit einem Antriebsmotor gekoppelten zweiten Getriebeelement.

Das erste Getriebeelement kann beispielsweise durch einen Zahnkranz gebildet werden, in den eine mit dem Antriebsmotor gekoppelte Schnecke als zweites Getriebeelement eingreift. Der Antriebsmotor ist in diesem Fall beispielsweise ein Elektromotor. Ist der Antriebsmotor beispielsweise eine hydraulische Zylinder/Kolbenanordnung, kann das zweite Getriebeelement als mit dem Zahnkranz zusammenwirkende Zahnstange ausgebildet sein.

Weitere Aufgaben, Merkmale und Vorteile der Erfindung werden nun anhand eines Ausführungsbeispiels mit Hilfe der Zeichnungen näher erläutert. Es zeigen:
- Fig. 1: eine Draufsicht auf eine erste Ausführungsform der erfindungsgemäßen Vorrichtung mit abgewinkeltem Füllrohr;
- Fig. 2: eine Draufsicht auf eine zweite Ausführungsform der erfindungsgemäßen Vorrichtung mit versetzten Füllrohabschnitten;
- Fig. 3: eine Seitenansicht der Vorrichtung gemäß Fig. 2;
- Fig. 4: eine geschnittene Detailansicht des Anschlussbereichs mit Füllrohrdrehlagerung gemäß einer ersten Ausführungsform;
- Fig. 5: eine geschnittene Detailansicht des Anschlussbereichs mit Füllrohrdrehlagerung gemäß einer zweiten Ausführungsform;
- Fig. 6: eine Draufsicht auf eine dritte Ausführungsform der erfindungsgemäßen Vorrichtung mit abgewinkeltem Füllrohr und Netzträger;
- Fig. 7: eine Draufsicht auf einen Ausschnitt des zweiten Füllrohrabschnitts mit Netzträger derselben Ausführungsform wie in Fig. 6;
- Fig. 8A, 8B: zwei Detailansichten einer Füllrohrdrehlagerung des Netzträgers in der Ausführungsform gemäß Fig. 6;
- Fig. 9: eine Detailansicht des ersten Füllrohrabschnitts mit Abstützung und manuellem Antrieb zur Drehung des Füllrohres;
- Fig. 10A, 10B: zwei Detailansichten der Abstützung des Füllrohres im Bereich des ersten Abschnitts gemäß der Ausführungsform aus Fig. 9 von der Gehäuseinnenseite;
- Fig. 11A, 11 B: zwei Detailansichten der manuellen Ausführungsform des Antriebs zur Drehung des Füllrohres gemäß Fig. 9 von der Vorderseite und
- Fig. 12: eine Detailansichten einer motorischen Ausführungsform des Antriebs zur Drehung des Füllrohres von der Vorderseite.

In den Figuren sind gleiche Bauteile mit identischen Nummern und modifizierte Bauteile mit überwiegend gleichen Funktionen mit denselben Nummern und Apostrophen gekennzeichnet.

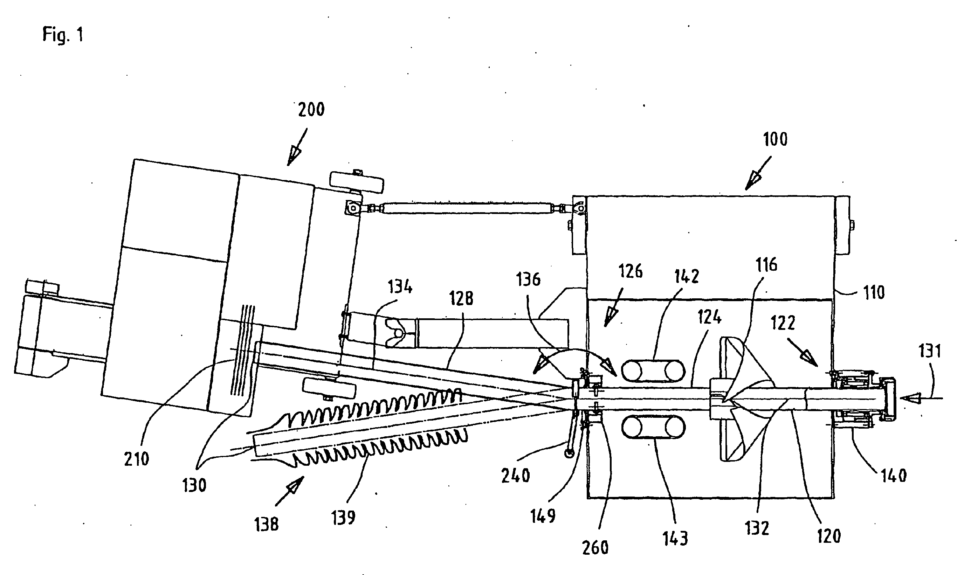

In Fig. 1 ist ein System zur Verpackung von fließ- oder rieselfähigem Füllgut in einer schlauchförmigen Verpackungshülle in der Draufsicht gezeigt, welches einerseits die erfindungsgemäße Vorrichtung 100 und andererseits eine mündungsseitig nachgeschaltete Verschließvorrichtung 200 zum Abteilen und Verschließen einer mit dem Füllgut gefüllten Portionspackung oder Wurst umfasst.

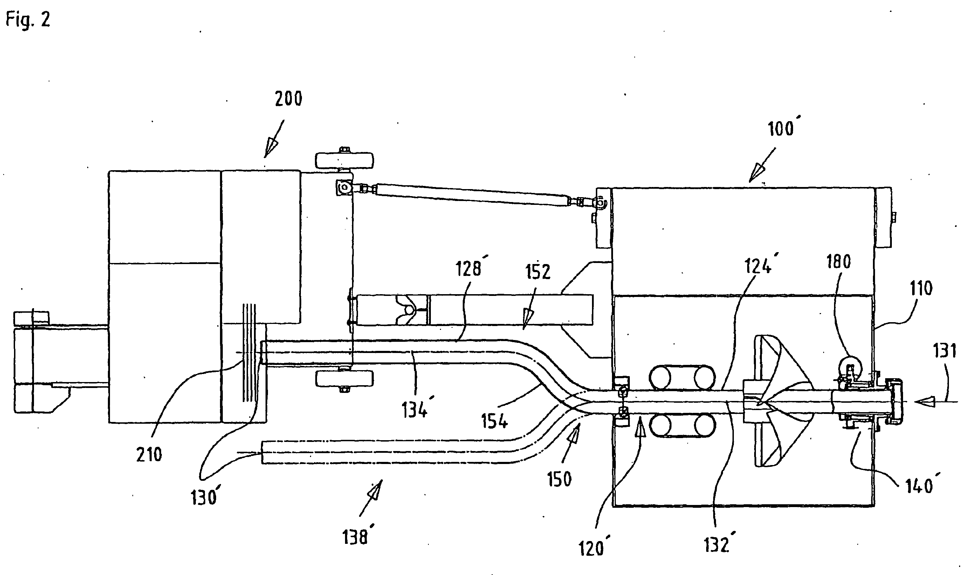

Die Vorrichtung 100 weist ein Gehäuse 110 unter anderem für eine in dieser Ansicht nicht dargestellte Siegeleinrichtung, eine Umformeinrichtung oder Formschulter 116 zum Umformen eines Folienbandes zu einem Folienschlauch 118 und eine Transporteinrichtung 142 in Form zweier Transportbänder 142, 143 zum Vorschieben des gesiegelten Folienschlauchs 118 im automatischen Betriebsmodus auf. Zur Erläuterung der Siegeleinrichtung wird auf die Beschreibung zu Fig. 2 weiter unten verwiesen. Die Vorrichtung 100 umfasst ferner ein Füllrohr 120, welches einen Anschluss 122, einen innerhalb des Gehäuses 110 verlaufenden ersten Abschnitt 124, eine Richtungsänderung 126, einen außerhalb des Gehäuses 110 verlaufenden zweiten Abschnitt 128 und eine am Ende des zweiten Abschnitts befindliche Mündung 130 aufweist. Das Füllrohr 120 weist durchgehend ein rundes Hohlprofil auf, durch dessen Lumen das Füllgut von einer anschlussseitig verbundenen Füllvorrichtung (nicht dargestellt) zu der Mündung 130 transportiert wird. Die Stromrichtung des Füllguts ist auf der Anschlussseite durch einen Pfeil 131 gekennzeichnet.

Der erste Füllrohrabschnitt 124 ist gerade, seine erste Zentrums- oder Längsachse ist durch eine strichpunktierte Line 132 gekennzeichnet. Auch der zweite Füllrohrabschnitt 128 verläuft geradlinig, seine zweite Zentrums- oder Längsachse ist durch eine strichpunktierte Linie 134 gekennzeichnet. Die beiden Längsachsen 132 und 134 des ersten bzw. zweiten Füllrohrabschnitts 124 bzw. 128 verlaufen nicht parallel sondern schneiden sich im Bereich der Richtungsänderung 126 und schließen einen Winkel 136 ein, der kleiner als 180° ist. In dem gezeigten Ausführungsbeispiel beträgt der Winkel ca. 172°. Hierdurch ist die dem Füllrohr 120 mündungsseitig nachgeschaltete Verschließvorrichtung 200 etwa 8° schräg zur Vorrichtung 100 angeordnet, so dass eine Wirkebene 210 der Verschließvorrichtung 200, in welcher sich Einschnürelemente zum Einschnüren der gefüllten Schlauchhülle und Verschließwerkzeugen zum Setzen und Verschließen von Verschlussklammern um die Schlauchhülle bewegen, senkrecht auf die zweite Längsachse 134 steht.

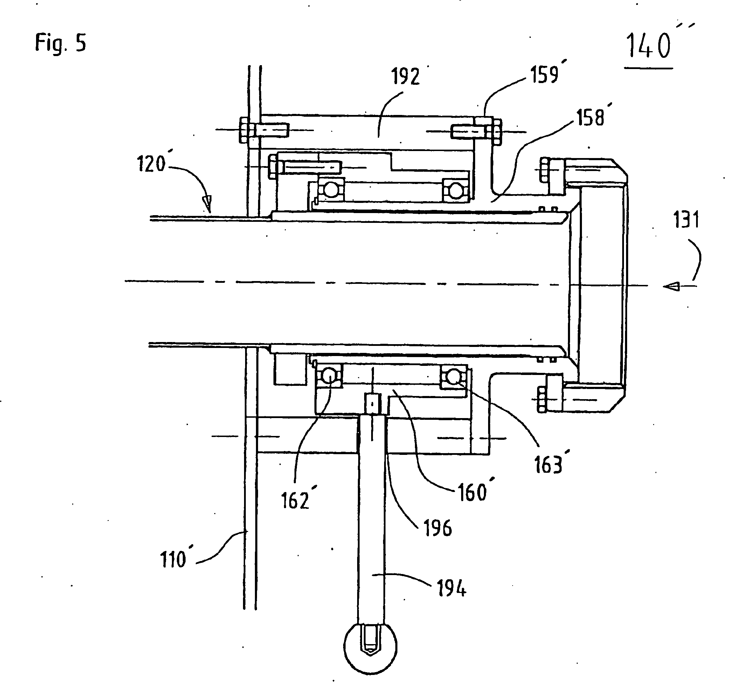

Im Anschlussbereich 122 stromaufwärts vor dem ersten Füllrohrabschnitt 124 weist das Füllrohr eine Füllrohrdrehlagerung 140 auf. Die Füllrohrdrehlagerung 140 ist an dem Gehäuse 110 auf dessen Außenseite angeordnet und befestigt, wie unter Bezugnahme auf Fig. 5 näher erläutert wird. Sie stützt und lagert das Füllrohr 120 radial und ermöglicht so eine Drehung des gesamten Füllrohrs 120 um die erste Längsachse 132. Durch eine solche Drehung wird der zweite Füllrohrabschnitt 128 aus der mit durchgezogener Linie dargestellten Betriebsstellung in eine mit doppel-strichpunktierter Linie dargestellte Bevorratungsstellung 138 geschwenkt.

In der Vorratungsstellung ist die Mündung 130 des zweiten Füllrohrabschnitts 128 frei zugänglich und es kann ein beispielsweise geraffter Vorrat 139 einer schlauchförmigen Verpackungshülle und/oder ein Netzmaterial von Hand über das mündungsseitige Ende auf den zweiten Füllrohrabschnitt 128 aufgezogen werden. Dazu muss die Schwenkbewegung nicht wie dargestellt um 180° um die erste Längsachse erfolgen. Je nach Platzangebot genügt auch eine Schwenkbewegung um weniger als 180° oder es ist eine um mehr als 180° erforderlich. Wahlweise, je nach Platzangebot kann eine Schwenkbewegung im Uhrzeigersinn oder entgegen dem Uhrzeigersinn erfolgen. Nach dem Bestücken des zweiten Füllrohrabschnitts 128 kann das gesamte Füllrohr 120 zurück in seine Betriebsstellung geschwenkt und die Produktion von Würsten gestartet oder fortgesetzt werden.

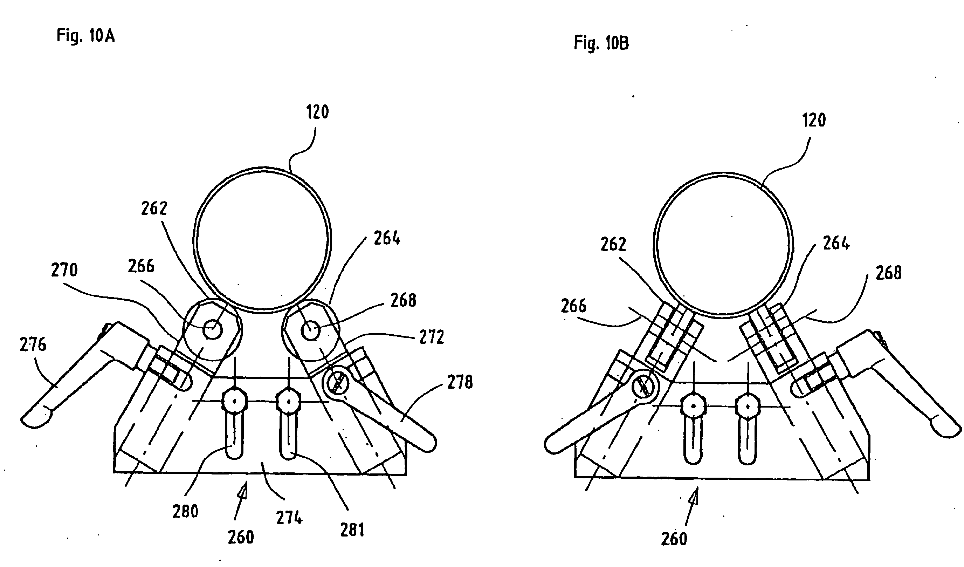

Auf der der Drehlagerung 140 gegenüberliegenden Seite des Gehäuses 110 ist das Füllrohr 120 zur Entlastung der Füllrohrdrehlagerung 140 im Bereich des ersten Abschnitts 124 mittels einer Abstützung 260 abgestützt. Hierzu wird näheres unter Bezugnahme auf Fig. 10 ausgeführt.

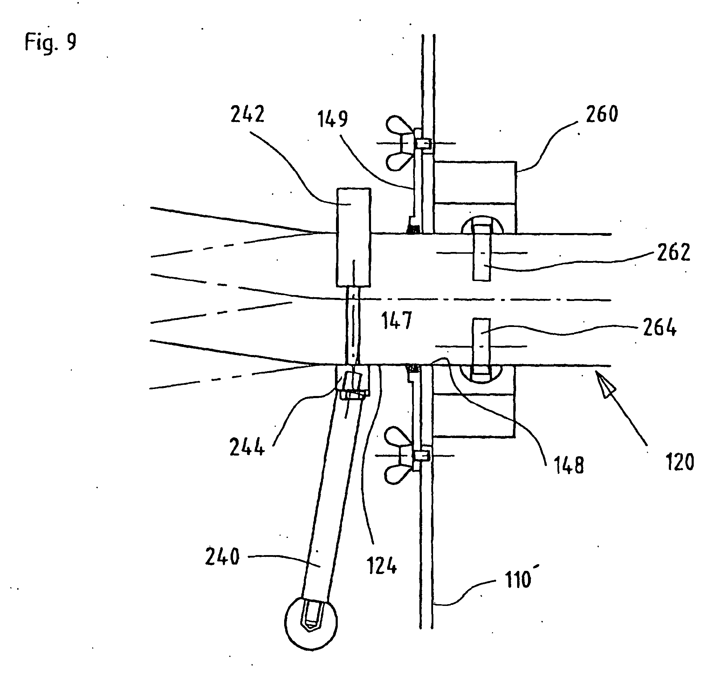

Das Füllrohr 120 tritt stromabwärts der Abstützung 145 noch mit seinem ersten Abschnitt 124 aus dem Gehäuse 110 aus. Zur Abdichtung des Gehäuses gegenüber dem Füllrohr 120 ist eine Abdeckung 149 vorgesehen, die unter Bezugnahme auf Fig. 9 näher erläutert wird. Die Abdeckung wird für den manuellen Betriebsmodus benötigt, um den Eintritt von Wasser in das Gehäuse 110 der Siegeleinrichtung zu verhindern.

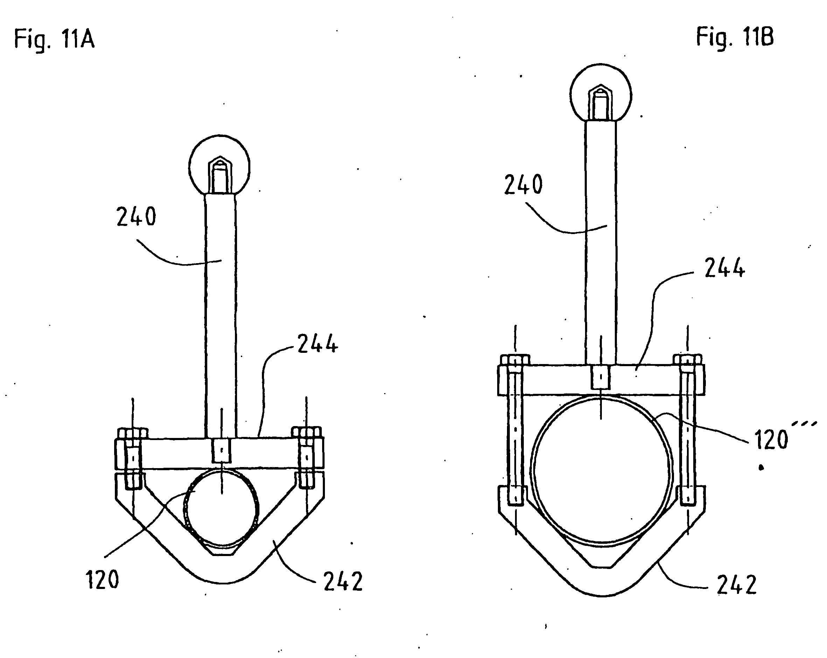

Weiter stromabwärts befindet sich noch immer im Bereich des ersten Abschnitts 124 eine Handhabe 240 zur manuellen Ausführung der Drehung des Füllrohres 120 um seine erste Längsachse 132. Diese wird unter Bezugnahme auf Fig. 9 und Fig. 11 genauer beschrieben.

In Fig. 2 ist eine Draufsicht auf ein anderes Ausführungsbeispiel der erfindungsgemäßen Vorrichtung 100' sowie einer stromabwärts daran anschließenden Verschließvorrichtung 200 gezeigt. Im Unterschied zum ersten Ausführungsbeispiel gemäß Fig. 1 weist das Füllrohr 120' zwischen seinem ersten Füllrohrabschnitt 124' und seinem zweiten Füllrohrabschnitt 128' zwei Richtungsänderungen 150, 152 auf, zwischen denen ein Zwischenabschnitt 154 den ersten Füllrohrabschnitt 124' mit dem zweiten Füllrohrabschnitt 128' verbindet. Der erste Füllrohrabschnitt 124' und der zweite Füllrohrabschnitt 128' weisen parallele Längsachsen 132' bzw. 134' auf, die in der gezeigten Betriebsstellung in horizontaler Richtung, d.h. in der Darstellungsebene zueinander versetzt sind. Hierdurch ist es möglich, die Verschließvorrichtung 200 mit ihrer Wirkebene 210, in welcher sich die Einschnürelemente und Verschließwerkzeuge bewegen, senkrecht zur Längsachse 134' des zweiten Füllrohrabschnitts 128' und damit in der Regel parallel zur Mündung 130' auszurichten. Durch eine Drehung des Füllrohres 120' um seine erste Längsachse 132' wird der Zwischenabschnitt 154 und der zweite Füllrohrabschnitt 128' aus der durchgezogenen dargestellten Betriebsstellung in die doppel-strichpunktiert dargestellte Bevorratungsstellung 138' geschwenkt, in der das mündungsseitige Ende 130' des zweiten Füllrohrabschnitts 128' - wie im ersten Ausführungsbeispiel - zur manuellen Bestückung mit einem Verpackungshüllenvorrat frei zugänglich ist.

Letzteres ist in dem in Fig. 2 dargestellten automatischen Betriebsmodus allerdings nicht erforderlich. Die kontinuierliche Herstellung von Folienschlauch bedingt den weiteren Unterschied zu dem in Fig. 1 gezeigten Ausführungsbeispiel, dass keine Abdeckung zum Abdichten des Gehäuses vorgesehen ist, da diese andernfalls den Folienschlauchtransport beim Austritt aus dem Gehäuse 110 behindern würde.

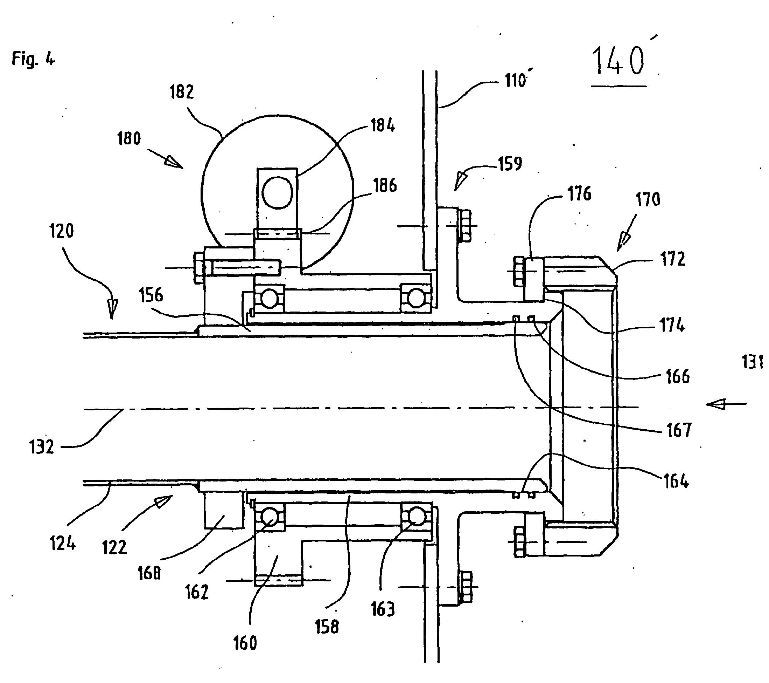

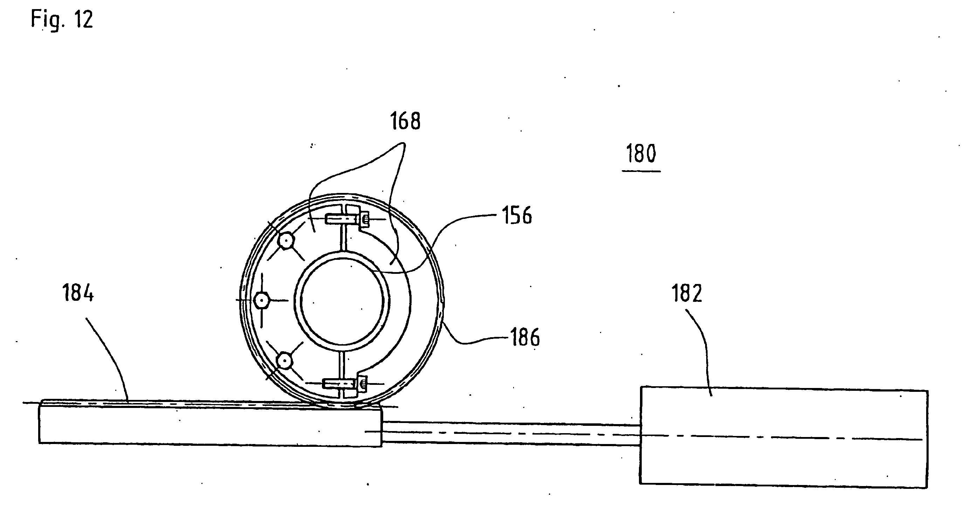

Auch fehlt bei der Vorrichtung 100' gemäß Fig. 2 die Handhabe zur Drehung des Füllrohres. Die Drehung wird bei dieser Vorrichtung durch einen motorischen Antrieb 180 ausgeführt. Auch deshalb unterscheiden sich die beiden Ausführungsformen ferner in der Anordnung des Drehlagers. Bei der Vorrichtung 100' gemäß Fig. 2 befindet sich das Drehlager 140' nun nicht mehr außerhalb sondern innerhalb des Gehäuses 110. Dies erlaubt zum einen eine kompaktere Bauweise zum anderen kann der motorische Antrieb 180 auf diese Weise in das Gehäuse 110 integriert und so geschützt werden. Nähere Einzelheiten zu dem Drehlager sind Fig. 4 und zu dem Antrieb Fig. 12 sowie der jeweils zugehörigen Beschreibung zu entnehmen.

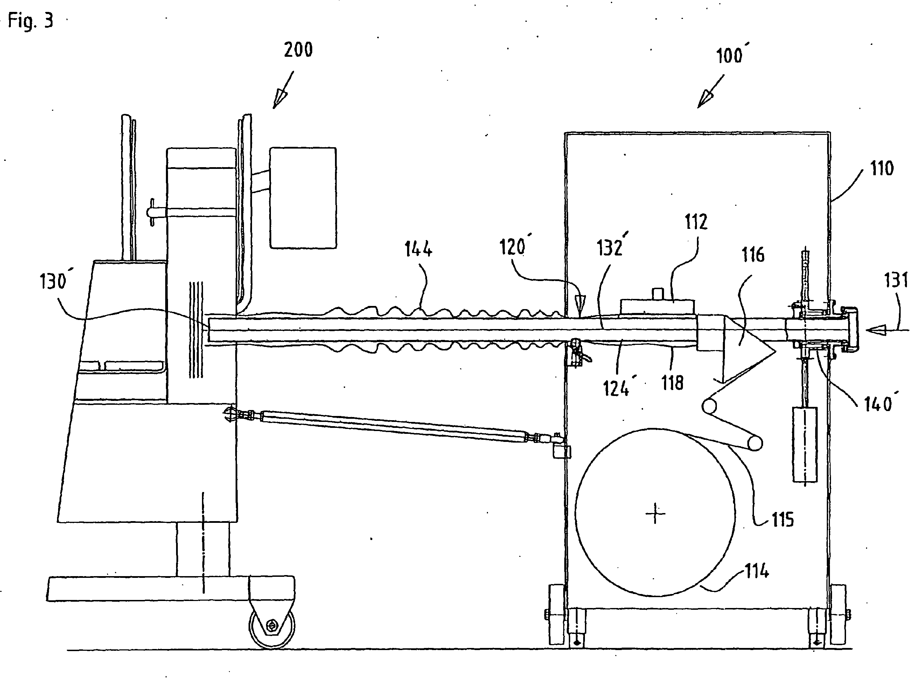

In Fig. 3 ist die Vorrichtung 100' gemäß dem Ausführungsbeispiel aus Fig. 2 in seiner Seitenansicht dargestellt. Das Füllrohr 120' befindet sich in seiner Betriebsstellung. In der Seitenansicht ist so keine Richtungsänderung des Füllrohrs 120' erkennbar, d.h. das Füllrohr liegt vollständig in der horizontalen Ebene senkrecht zur Abbildungsebene der Fig. 3, vgl. Fig. 2.

Das Gehäuse 110 der Vorrichtung 100' beinhaltet neben der Formschulter 116 und der Transporteinrichtung 142 aus Fig. 1 bzw. Fig. 2 die bereits erwähnte Siegeleinrichtung 112, eine Vorratsrolle 114 eines Folienbandes 115. Letzteres wird der Formschulter 116 zugeführt und über diese zu einem Folienschlauch 118 mit benachbart zueinander liegenden Längskanten des Folienbandes umgeformt. Danach werden die Längskanten von der Siegeleinrichtung 112, welche vereinfacht als Schweißbalken dargestellt ist, versiegelt, wodurch der Schlauch geschlossen wird. Der Schweißbalken 112 wird zu diesem Zweck im Bereich der benachbart zueinander liegenden Längskanten gegen das Folienband 115 bzw. den noch nicht geschlossenen Folienschlauch 118 angedrückt. Das Füllrohr 120 bildet hierfür im Bereich seines ersten Abschnitts 124 ein Gegenlager.

Der Folienschlauch 118 wird mittels der Transportbänder 142, 143 kontinuierlich unter dem Schweißbalken 112 hindurchgezogen, damit die Folie im Bereich der Schweißnaht nicht durchschmilzt.

Da der Schweißvorgang in diesem Fall kontinuierlich, der Füll-, Abteil- und Verschließvorgang auf der Seite der Verschließvorrichtung 200 jedoch intermittierend erfolgt, wird ein gestauchter Vorrat 144 an Schlauchfolienmaterial angestaut. Es ist bekannt mit Sensoren die Menge des Vorrats zu erfassen und so die Schweiß- oder Siegelvorrichtung nach Bedarf ein- oder ausschalten.

Alternativ zu der dargestellten kontinuierlichen Herstellung des Folienschlauches kann der Siegelvorgang auch synchron zum Füll-, Abteil- und Verschließvorgang erfolgen. Dazu kann der Schweißbalken 112 beispielsweise auch im Takt des Verschließens von den Längskanten des Folienbandmaterials abgehoben werden, um den Schweißvorgang zu unterbrechen, und wieder aufgesetzt werden, um den Schweißvorgang fortzusetzen.

Fig. 4 zeigt einen Ausschnitt der erfindungsgemäßen Vorrichtung im Bereich des Anschlusses 122 bzw. der Füllrohrdrehlagerung 140. Der Anschluss 122 weist einen koaxial zum ersten Füllrohrabschnitt 124 ausgerichteten und mit diesem beispielsweise durch eine Schweißverbindung verbundenen Ansatz 156 auf mit vergrößertem Außendurchmesser aber vorzugsweise gleichem Innendurchmesser, um den Strömungsquerschnitt gegenüber dem ersten Füllrohrabschnitt 124 nicht zu verändern. Werden verschiedene Füllrohre beispielsweise für unterschiedliche Wurstkaliber eingesetzt, so bezweckt der Ansatz unter Beibehaltung des gleichen Außerdurchmessers, dass diese immer mit derselben Füllrohrdrehlagerung 140 kompatibel sind.

Die Füllrohrdrehlagerung 140 besteht im Wesentlichen aus einem ersten Element 158, welches mit dem Gehäuse der Siegeleinrichtung oder genauer mit einem Wandabschnitt 110' des Gehäuses verbunden ist, und einem zweiten, gegenüber dem ersten Element 158 drehbaren Element 160, welches mit dem Füllrohr 120 verbindbar ist. Das erste Element 158 ist mit einem Flanschabschnitt 159 direkt von der Außenseite an die Gehäusewand 110' angeflanscht, wodurch das Gehäuse 110 eine Tragstruktur für die Füllrohrdrehlagerung bildet. Das zweite Element 160 ist gemäß dem Ausführungsbeispiel der Fig. 4 mittels zweier Wälzkörperlager 162, 163 radial auf dem ersten Element 158 gelagert. Dabei befindet sich das zweite Element 160 sowie die die Wälzkörperlager im Gehäuseinneren oder genauer auf der Innenseite der Gehäusewand 110'.

Das Füllrohr 120 ist mit dem Ansatz 156 in das erste Element 158 der Füllrohrdrehlagerung eingesteckt und auf einer Dichtfläche 164 außenumfänglich gegenüber diesem mittels einer aus zwei O-Ringen 166, 167 bestehenden Dichtung abgedichtet, damit kein Füllgut, welches üblicherweise unter Druck aus der Füllvorrichtung in das Füllrohr eingeleitet wird, in die Füllrohrdrehlagerung 140 eindringen kann. Weiterhin ist das Füllrohr 120 an seinem Ansatz 156 mittels eines Klemmelements 168 mit dem zweiten Element 160 der Drehverbindung 140 lösbar verbunden und somit radial gegenüber dem ersten Element 158 und somit gegenüber dem Gehäuse 110 gelagert. Wird die Klemmung gelöst, kann das Füllrohr axial aus dem ersten Element 158 der Drehverbindung 140 herausgezogen und zu Wartungs- oder Reinigungszwecken entfernt werden.

Auf der Außenseite des Gehäuses 110 ist auf dem ersten Element 158 der Füllrohrdrehlagerung 140 ein Flansch 170 zur Verbindung mit der vorgeschalteten Füllvorrichtung (nicht dargestellt) angeordnet. Die Füllvorrichtung weist bekanntermaßen eine Pumpe mit einem Extruder zum Fördern des Füllguts in Richtung 131 auf. Der Flansch weist eine an die Füllvorrichtung angepasste Überwurfmutter 172 auf, die mittels Hinterschneidungen 174 an dem ersten Element 158 und einem geteilten Haltering 176 unverlierbar mit der Füllrohrdrehlagerung 140 verbunden ist.

Die Drehbewegung des Füllrohres 120 um die Achse 132 des ersten Abschnitts 124 wird von einem motorischen Antrieb 180 erzeugt. Der Antrieb weist einen linearen Antriebsmotor 182 in für einer pneumatischen oder hydraulischen Zylinder-/Kolbenanordnung auf. An dem Kolben ist eine Zahnstange 184 befestigt die die lineare Kolbenbewegung auf einen mit dem zweiten Element 160 der Füllrohrdrehlagerung 140 verbundenen Zahnkranz 168 und somit schließlich auf das Füllrohr 120 überträgt, vgl. auch Fig. 12. Anstelle des linearen Antriebsmotors kann auch ein beispielsweise elektrischer Rotationsantrieb vorgesehen sein, der die Motordrehung mittels eines Getriebes (Schnecken-, Zahnrad- Umschlingungsgetriebe) auf das zweite Element 160 überträgt.

Alternativ zu der Füllrohrdrehlagerung gemäß Fig. 4 zeigt Fig. 5 ein Ausführungsbeispiel, wonach das erste Element 158' mit dem Flanschabschnitt 159' durch eine Distanzhülse 192 beabstandet von der Außenseite an die Gehäusewand 110' angeflanscht ist. Die Länge der Distanzhülse 192 ist so gewählt, dass das zweite Element 160' samt Walzkörperlager 162', 163' nunmehr auf der Außenseite der Gehäusewand 110' in dem ersten Element 158' gelagert ist.

Ferner ist alternativ zu dem in Fig. 4 gezeigten pneumatisch-motorischen Antrieb, eine einfache Handhabe 194 als Antrieb zur manuellen Drehung des Füllrohres 120' vorgesehen. Die Handhabe 194 greift anders als im Beispiel von Fig. 1 nicht an dem ersten Füllrohabschnitt 124 sondern unmittelbar an dem zweiten Element 160' der Füllrohrdrehlagerung 140" an und wird durch einen Schlitz 196 in der Distanzhülse 192 nach außen geführt.

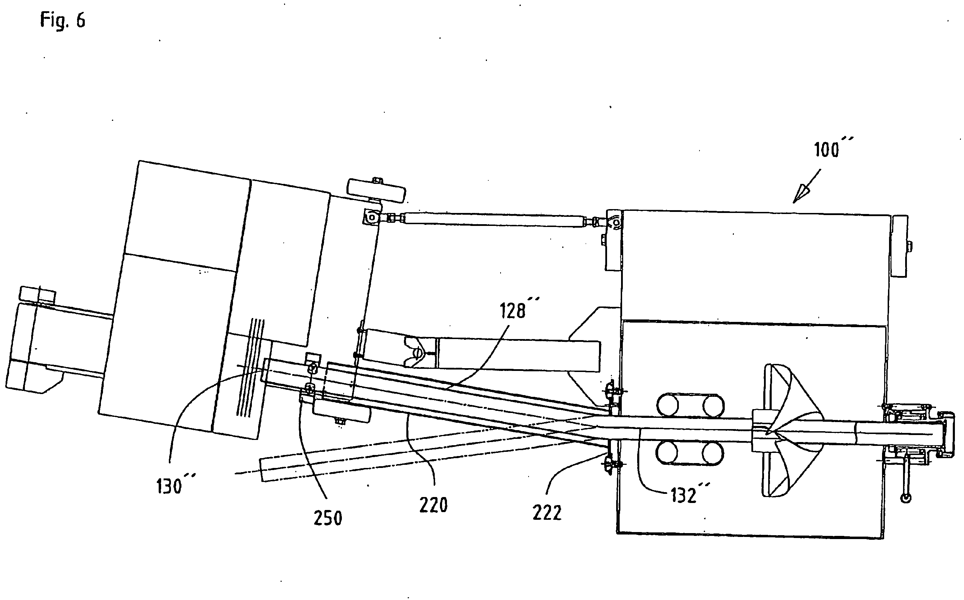

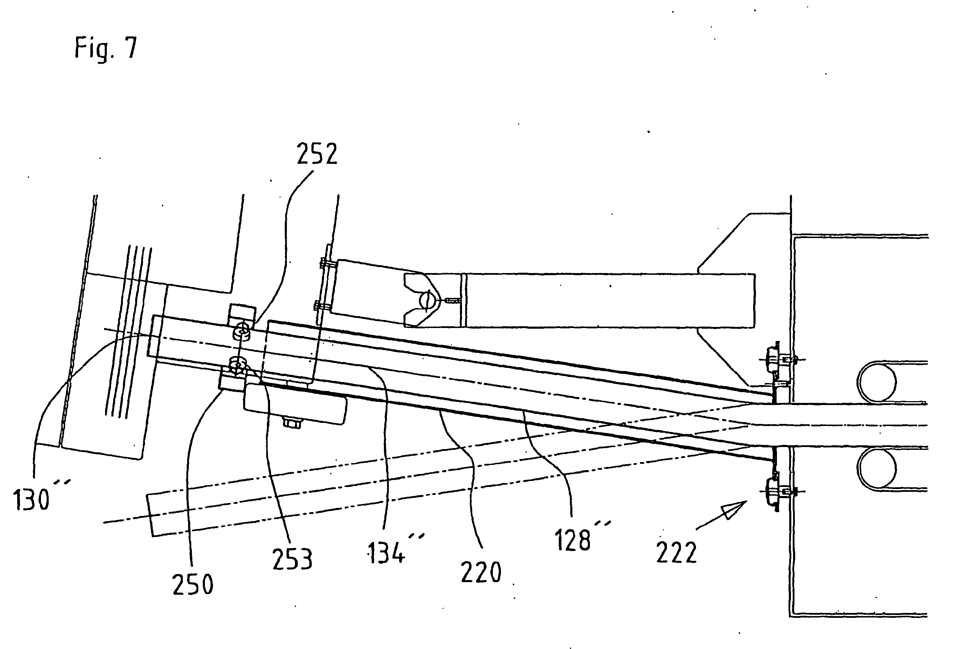

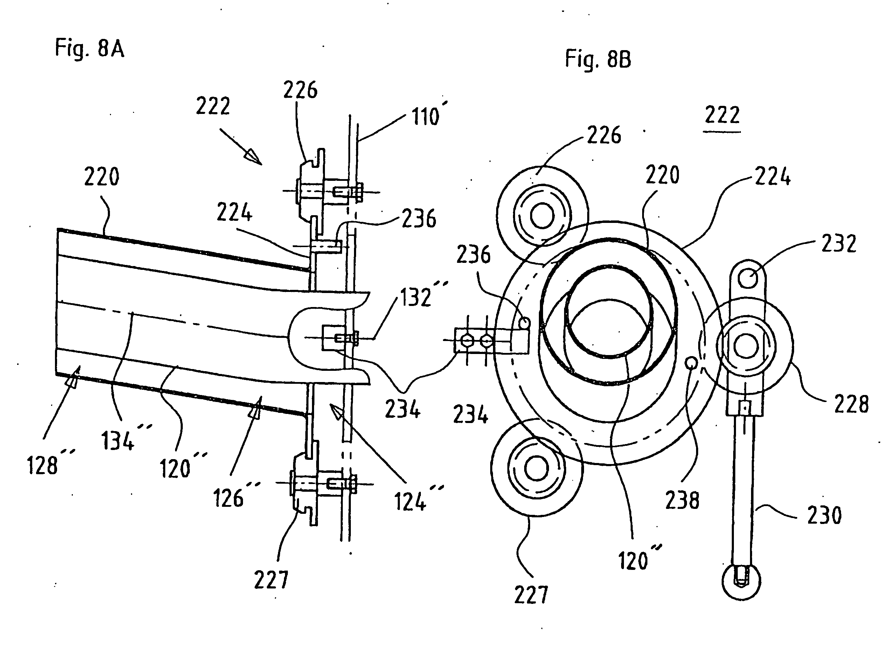

In Fig. 6 ist eine Draufsicht auf eine dritte Ausführungsform der erfindungsgemäßen Vorrichtung 100" dargestellt, welche im Wesentlichen der Vorrichtung aus Fig. 1 gleicht und zusätzlich einen Netzhalter 220 aufweist. Der Netzhalter ist rohrförmig ausgebildet und umgibt den zweiten, abgewinkelten Füllrohrabschnitt 128" koaxial bis kurz vor dessen mündungsseitiges Ende. Er ist zusammen mit diesem um die erste Längsachse 132" drehbar. Zu diesem Zweck ist der Netzhalter 220 an einer um die erste Längsachse 132" wirksamen Netzhalterdrehlagerung 222 gelagert, vgl. auch Fig. 7 und Fig. 8.

Am vorderen Ende nahe der Mündung 130" wird der zweite Füllrohrabschnitt 128" von einer zweiten Abstützung 250 in seiner Betriebsstellung unterstützt. Diese Abstützung 250 umfasst zylinderförmige Rollkörper 252, 253, die angular versetzt unterhalb der zweiten Längsachse 134" angeordnet und um Achsen drehbar gelagert sind, die senkrecht und V-förmig angestellt zur zweiten Längsachse 134" ausgerichtet sind. Auf diese Weise verursacht der über den Füllrohrabschnitt 128" gezogene Folienschlauch und/oder das von dem Netzhalter 220 abgezogene Netz eine Rotation Rollkörper 252 und zumindest dort keinen zusätzlichen Reibungswiderstand. Ein Reibungswiderstand entsteht lediglich entlang der Außenwand des Füllrohres dort wo die Rollkörper 252 das Füllrohr unterstützen.

Die Netzhalterdrehlagerung 222 gemäß Fig. 8A und 8B weist eine mit dem Netzhalter 220 verbundene, in diesem Fall angeschweißte, Lagerscheibe 224 und drei Lager- und Führungsrollen 226, 227 ,228 auf. Die Längserstreckungsrichtung des Netzhalters 220 fällt in der gezeigten Betriebsstellung mit der zweiten Längsachse 134" des Füllrohres 120" zusammen, d.h. der Netzhalter 220 ist in diesem Beispiel 8° schräg zur Senkrechten auf die Lagerscheibe.224 angestellt.

Die Lagerscheibe 224 befindet sich in axialer Richtung noch im Bereich des ersten Füllrohrabschnitts 128". Die Lager- und Führungsrollen 226, 227 ,228 sind mit der Gehäusewand 110' der Siegeleinrichtung so verbunden, dass die daran gelagerte Lagerscheibe 224 senkrecht zur ersten Längsachse 132" orientiert ist. Dies bewirkt, dass der Netzhalter 220 eine Schwenkbewegung um dieselbe Rotationsachse, um die auch das Füllrohr 120" geschwenkt wird, ausführt. Die obere Lager- und Führungsrolle 228 ist an einem Hebel 230 angeordnet, der um eine Achse 232 schwenkbar an der Gehäusewand 110' angelenkt ist. Durch Wegschwenken des Hebels 230 gibt die obere Lager- und Führungsrolle 228 die Lagerscheibe 224 frei, so dass der Netzhalter 220, wenn er nicht gebraucht wird, zum Netzwechsel oder zu Wartungs- oder Reinigungszwecken, nach oben von der Vorrichtung 100" abgenommen werden kann. Dies ist auch bei montiertem Füllrohr 120" möglich.

Der Netzhalter 220 ist in diesem Beispiel nicht selbst aktiv angetrieben sondern wird durch die Schwenkbewegung des Füllrohres 120" mitgenommen. Damit der Netzhalter in den Endstellungen des Füllrohres, der Betriebsstellung nahe der Verschließvorrichtung und der abgeschwenkten Bervorratungsstellung, koaxial zu diesem ausgerichtet ist, sind an der Gehäusewand 110' ein Anschlagblock 234 und an der Lagerscheibe 224 zwei korrespondierende Anschlagbolzen 236, 238 vorgesehen. Diese wirken so zusammen, dass die Lagerscheibe 224 in einer Position angehalten wird, in der der Netzhalter 220 jeweils horizontal ausgerichtet ist.

Der Netzhalter muss nicht rohrförmig sein. Beispielsweise kann auch eine offene Rahmenkonstruktion mit mehreren längs des zweiten Füllrohabschnitts verlaufenden Streben oder dgl. verwendet werden. Maßgeblich ist, dass das Netz nach Möglichkeit berührungsfrei über dem zweiten Füllrohrabschnitt 128" und der darauf geleiteten Schlauchhülle bzw. dem Schlauchhüllenvorrat gehalten wird.

Fig. 9 stellt die Ausführungsform gemäß Fig. 1 im Bereich des Durchtritts des ersten Füllrohrabschnitts 124 durch die Gehäusewand 110' mit der Abstützung 260 dem manuellem Antrieb oder Handhabe 240 zur Drehung des Füllrohres 120 und der Abdeckung 149 im Detail dar. Das Füllrohr tritt noch mit seinem ersten Abschnitt 124 auf der dem Drehlager gegenüberliegenden Seite aus dem Gehäuse 110 durch eine Öffnung 148 in der Gehäusewand 110' aus. In Strömungsrichtung 131 hinter der Öffnung 148 ist die Abdeckung 149 zur Abdichtung der Gehäuseöffnung 148 gegenüber dem Füllrohr 120 an der Gehäusewand 110' angeflanscht und dichtet das Gehäuse vor eindringendem Wasser oder dgl. ab. Die Abdichtung wird bei Verwendung eines manuell aufgezogenen Schlauchvorrats 139, der vor Verarbeitung üblicherweise gewässert wird, also im manuellen Betriebsmodus vorgenommen. Die Abdeckung 149 weist eine flexible ringförmig umlaufende Dichtlippe 147 auf, die außenumfänglich an dem Füllrohr 120 im Beriech des ersten Abschnitts 124 anliegt und somit ein Herausziehen des Füllrohres 120 aus der Abdeckung erlaubt.

Zur Entlastung der Füllrohrdrehlagerung 140 ist im Bereich des ersten Füllrohrabschnitts 124 ebenfalls auf der dem Drehlager gegenüberliegenden Seite des Gehäuses 110 die Abstützung 260 mit zwei das Füllrohr 120 unterstützenden Rollkörpern 262, 264 angeordnet. Die Abstützung 260 ist von der Gehäuseinnenseite an der Gehäusewand 110' befestigt.

Wie in den zwei Detailansichten der Fig. 10A und 10B genauer zu sehen ist, sind die zylinderförmigen Rollkörper 262, 264 angular versetzt unterhalb der Längsachse des Füllrohres 120 im ersten Abschnitt senkrecht und V-förmig zu diesem angestellt. Die Rollkörper 262, 264 sind zwischen zwei Stellungen relativ zur Längsachse des Füllrohres der Gestalt schwenkbar, dass ihre Drehachsen 266 bzw. 268 wahlweise parallel oder senkrecht zur ersten Längsachse ausgerichtet werden können. Zu diesem Zweck sind die Rollkörper 262, 264 in separaten Rollenlager 270, 272 gelagert, die ihrerseits um Schwenkachsen drehbar in einem Lagerkörper 274 angeordnet sind, welche radial senkrecht auf die erste Längsachse des Füllrohres 120 zulaufen. Mit Klemmhebeln 276, 278 können die Rollenlager 270, 272 und somit die Drehachsen 266 bzw. 268 in der jeweils gewünschten Winkelstellungen arretiert werden.

Die Winkelstellung mit parallelen Drehachsen 266, 268, siehe Fig. 10A, wird im ersten, manuellen Betriebsmodus gewählt. So setzen die Rollkörper 262, 264 einer Drehung des Füllrohres 120 um die erste Längsachse 132 nur einen Rollaber keinen Reibungswiderstand entgegen.

Die Winkelstellung gemäß Fig. 10B wird hingegen im zweiten, automatischen Betriebsmodus gewählt, damit die nun senkrecht zur ersten Längsachse 132 ausgerichteten Drehachsen 266, 268 dem gesiegelten, über den ersten Füllrohrabschnitt geleiteten Folienschlauch 118 nur einen Roll- aber keinen zusätzlichen Reibungswiderstand entgegensetzen. Reibungswiderstand entsteht so nur zwischen Folienschlauch und der Füllrohraußenwand.

Die Abstützung 260 durch eine Schraubverbindung des Lagerkörpers 274_an der Gehäusewand 110' befestigt. Hierzu weist der Lagerkörper 274 zwei Langlöcher 280, 281 auf, die Befestigung mit variablem Abstand zu der ersten Längsachse des Füllrohres 120 erlaubt. Auf diese Weise kann die Abstützung auf einfache Weise an verschiedene Füllrohrdurchmesser angepasst werden, so dass deren Längsachse in dem Gehäuse 110 immer dieselbe Lager einnimmt.

Die Figuren 11A und 11B zeigen zwei Detailansichten des manuellen Antriebs zur Drehung des Füllrohres gemäß Fig. 9 von dessen Vorderseite. Dieser besteht aus der Handhabe 240, welche an einer Klemmvorrichtung, bestehend aus einem prismenförmigen Unterteil 242 und einer Klemmplatte 244 befestigt ist. Zwischen dem Unterteil 242 und der Klemmplatte 244 ist das Füllrohr 120 bzw. 120"' eingespannt, wobei die Prismenform des Unterteils 242 erlaubt, dass Füllrohre 120, 120"' mit unterschiedlichem Außendurchmesser zentriert eingespannt werden können.

Fig. 12 zeigt die motorische Ausführungsform des Antriebs 180 zur Drehung des Füllrohres von der Vorderseite. Neben dem linearen Antriebsmotor 182, der Zahnstange 184, dem Zahnkranz 186 lässt Fig. 12 die Klemmung 68 genauer erkennen. Diese besteht aus zwei Ringhälften, die eine an den Außendurchmesser des Ansatzes 156 angepasste Öffnung bilden, in der der Ansatz 156 aufgenommen und geklemmt wird. Zur Mitnahme der Klemmung 168 ist diese in dem gezeigten Ausführungsbeispiel mit dem zweiten Element 160 der Drehlagerung 140' verschraubt.

## Patentansprüche

1. Vorrichtung (100) zum Verpacken von fließ- oder rieselfähigem Füllgut in einer schlauchförmigen Verpackungshülle mit
einem an eine Füllvorrichtung anschließbaren Füllrohr (120) zum Leiten eines Stromes des Füllgutes von der Füllvorrichtung zu einer Verschließvorrichtung (200) für die Verpackungshülle, welches einen Anschluss (122), eine Mündung (130), einen dem Anschluss (122) benachbarten, im Wesentlichen geraden ersten Abschnitt (124) mit einer ersten Längsachse (132, 232) und einen der Mündung (130) benachbarten, mit dem ersten Abschnitt (124) in Verbindung stehenden zweiten Abschnitt (128) aufweist,
wobei der erste Abschnitt (124) eingerichtet ist, auf seinem Außenumfang einen in Form eines Folienbandes (114) zugeführten und um den ersten Abschnitt (124) herum geformten Folienschlauch (118) aufzunehmen und zu leiten, und der zweite Abschnitt (128) eingerichtet ist, den aus Folienband (114) geformten Folienschlauch (118) weiter zu leiten oder einen zuvor von der Mündung (130) her auf den zweiten Abschnitt (128) aufgezogenen Vorrat an schlauchförmiger Verpackungshülle aufzunehmen und zu leiten,
**dadurch gekennzeichnet, dass** das Füllrohr (120) stromaufwärts vor dem ersten Abschnitt (124) eine Füllrohrdrehlagerung (140) um die erste Längsachse (132) und zwischen dem ersten und dem zweiten Abschnitt (128) wenigstens eine Richtungsänderung (126, 150, 152) aufweist.

2. Vorrichtung nach Anspruch 1,
**dadurch gekennzeichnet, dass** der erste und zweite Abschnitt (128) einstückig zusammenhängen.

3. Vorrichtung nach Anspruch 1 oder 2,
**dadurch gekennzeichnet, dass** der zweite Abschnitt (128) im Wesentlichen gerade ist und eine zweite Längsachse (134) aufweist, die mit der ersten Längsachse (132) einen Winkel (136) kleiner als 180° einschließt.

4. Vorrichtung nach Anspruch 1 oder 2,
**dadurch gekennzeichnet, dass** der zweite Abschnitt (128) im Wesentlichen gerade ist und eine zweite Längsachse (134) aufweist, wobei der erste und zweite Abschnitt (128) durch einen Zwischenabschnitt (154) so verbunden sind, dass die erste und zweite Längsachse (134) parallel versetzt verlaufen.

5. Vorrichtung nach einem der vorstehenden Ansprüche,
**gekennzeichnet durch** eine das Füllrohr (120) im Bereich des zweiten Abschnitts (128) zumindest teilweise umgebende Netzhalterung (220) mit einer um die erste Längsachse (132) wirksamen Netzhalterdrehlagerung (222).

6. Vorrichtung nach einem der vorstehenden Ansprüche,
**gekennzeichnet durch** eine Tragstruktur, an der ein erstes Element (158) der Füllrohrdrehlagerung (140) des Füllrohrs (120) angeordnet ist, wobei das Füllrohr (120) mit einem zweiten Element (160) der Füllrohrdrehlagerung (140) verbindbar ist.

7. Vorrichtung nach einem der vorstehenden Ansprüche,
**gekennzeichnet durch** eine das Füllrohr (120) im Bereich des ersten Abschnitts (124) umgebende Formschulter (116) zum Umformen des zugeführten Folienbandes (114) zu einem Folienschlauch (118), so dass Längskanten des Folienbandes (114) benachbart zueinander zu liegen kommen, und **durch** eine im Bereich des ersten Abschnitts (124), stromabwärts der Umformeinrichtung angeordneten Siegeleinrichtung (112) zum Siegeln der nach dem Umformen benachbarten Längskanten entlang des Füllrohres (120).

8. Vorrichtung nach Anspruch 7,
**dadurch gekennzeichnet, dass** das Füllrohr (120) im Bereich des ersten Abschnitts (124) stromabwärts der Schweiß- oder Siegeleinrichtung (112) von wenigstens einem Rollkörper (262) unterstützt wird.

9. Vorrichtung nach einem der vorstehenden Ansprüche,
**gekennzeichnet durch** einen Antrieb (180) zur Drehung des Füllrohres (120) um die erste Längsachse (132) mit einem Antriebsmotor (182), einem mit dem ersten Abschnitt (124) verbundenen Getriebeelement und einem mit einem Antriebsmotor (182) gekoppelten zweiten Getriebeelement.

10. Vorrichtung nach einem der vorstehenden Ansprüche,
**gekennzeichnet durch** eine Handhabe (190, 194, 230, 240) zur Drehung des Füllrohres (120) um die erste Längsachse (132).

## Claims

1. Apparatus (100) for packaging free-flowing or pourable material in a tubular packaging casing, having
a filling tube (120) that can be connected to a filling device for conducting a stream of the material from the filling device to a closing device (200) for the packaging casing, which has a connection (122), a mouth (130), a substantially straight first section (124) adjacent to the connection (122) and having a first longitudinal axis (132, 232), and a second section (128) adjacent to the mouth (130) and connected to the first section (124),
the first section (124) being designed to receive and guide on its outer circumference a film tube (118) delivered in the form of a film strip (114) and shaped round the first section (124), and the second section (128) being designed to further guide the film tube (118) shaped from film strip (114) or to receive and guide a stock of tubular packaging casing previously pulled over the second section (128) from the mouth (130),
**characterised in that** the filling tube (120) has a filling tube rotary mounting (140) about the first longitudinal axis (132) upstream of the first section (124), and at least one change of direction (126, 150, 152) between the first and second sections (128).

2. Apparatus according to claim 1, **characterised in that** the first and second sections (128) are connected in one piece.

3. Apparatus according to claim 1 or 2, **characterised in that** the second section (128) is substantially straight and has a second longitudinal axis (134) which with the first longitudinal axis (132) forms an angle (136) of less than 180°.

4. Apparatus according to claim 1 or 2, **characterised in that** the second section (128) is substantially straight and has a second longitudinal axis (134), the first and second sections (128) being connected by an intermediate section (154) in such a way that the first and second longitudinal axes (134) are parallel and offset.

5. Apparatus according to any of the preceding claims, **characterised by** a net support (220) at least partially surrounding the filling tube (120) in the region of the second section (128) and having a net support rotary mounting (222) operating about the first longitudinal axis (132).

6. Apparatus according to any of the preceding claims, **characterised by** a supporting structure on which is arranged a first element (158) of the filling tube rotary mounting (140) of the filling tube (120), the filling tube (120) being capable of connection to a second element (160) of the filling tube rotary mounting (140).

7. Apparatus according to any of the preceding claims, **characterised by** a shaping shoulder (116) surrounding the filling tube (120) in the region of the first section (124) for shaping the film strip (114) which is delivered to form a film tube (118), so that longitudinal edges of the film strip (114) come to lie adjacent to each other, and by a sealing device (112) arranged in the region of the first section (124) downstream of the shaping device for sealing the longitudinal edges which are adjacent after shaping along the filling tube (120).

8. Apparatus according to claim 7, **characterised in that** the filling tube (120) is supported by at least one rolling body (262) in the region of the first section (124) downstream of the welding or sealing device (112).

9. Apparatus according to any of the preceding claims, **characterised by** a drive (180) for rotating the filling tube (120) about the first longitudinal axis (132) with a drive motor (182), a gear element connected to the first section (124) and a second gear element coupled to a drive motor (182).

10. Apparatus according to any of the preceding claims, **characterised by** a handle (190, 194, 230, 240) for rotating the filling tube (120) about the first longitudinal axis (132).

## Revendications

1. Dispositif (100) pour l'emballage d'un produit fluide ou apte à l'écoulement dans une gaine d'emballage en forme de tuyau, comprenant
un tube de remplissage (120), raccordable à un dispositif de remplissage, pour guider un flux de produit du dispositif de remplissage vers un dispositif de fermeture (200) pour la gaine d'emballage, lequel présente un raccord (122), un débouché (130), une première section (124) essentiellement rectiligne, voisine du raccord (122), avec un premier axe longitudinal (132, 232), et une seconde section (128) voisine du débouché (130), en liaison avec la première section (124),
où la première section (124) est conçue pour recevoir et envoyer sur son pourtour extérieur une feuille en gaine (118) amenée en forme d'un ruban de feuille (114) et formée autour de la première section (124), et la seconde section (128) est conçue pour continuer à envoyer la feuille en gaine (118) formée à partir du ruban de feuille (114) ou pour recevoir et envoyer une réserve de gaine d'emballage en forme de tuyau, préalablement tirée à partir du débouché (130) sur la seconde section (128),
**caractérisé en ce que** le tube de remplissage (120) présente en amont de la première section (124) un coussinet de pivotement de tube de remplissage (140) autour du premier axe longitudinal (132) et au moins un changement de direction (126, 150, 152) entre la première et la seconde section (128).

2. Dispositif suivant la revendication 1, **caractérisé en ce que** la première et la seconde section (128) sont connectées d'une seule pièce.

3. Dispositif suivant l'une des revendications 1 et 2, **caractérisé en ce que** la seconde section (128) est essentiellement rectiligne et présente un second axe longitudinal (134), qui forme avec le premier axe longitudinal (132) un angle (136) inférieur à 180°.

4. Dispositif suivant l'une des revendications 1 et 2, **caractérisé en ce que** la seconde section (128) est essentiellement rectiligne et présente un second axe longitudinal (134), où la première et la seconde section (128) sont assemblées par une section intermédiaire (154) de sorte que le premier et le second axe longitudinal (134) s'étendent en déport parallèle.

5. Dispositif suivant l'une des revendications précédentes, **caractérisé par** un support de filet (220) entourant au moins en partie le tube de remplissage (120) dans la zone de la seconde section (128), avec un coussinet de pivotement de support de filet (222) actif autour du premier axe longitudinal (132).

6. Dispositif suivant l'une des revendications précédentes, **caractérisé par** une structure porteuse, sur laquelle est disposé un premier élément (158) du coussinet de pivotement (140) du tube de remplissage (120), où le tube de remplissage (120) peut être assemblé avec un second élément (160) du coussinet de pivotement (140).

7. Dispositif suivant l'une des revendications précédentes, **caractérisé par** un épaulement (116), entourant le tube de remplissage (120) dans la zone de la première section (124), pour le formage du ruban de feuille amené (114) en une feuille en gaine (118), de sorte que des arêtes longitudinales du ruban de feuille (114) viennent se situer au voisinage les unes des autres, et par un dispositif de scellement (112) disposé dans la zone de la première section (124), en aval du dispositif de formage, pour sceller les arêtes longitudinales, voisines après le formage, le long du tube de remplissage (120).

8. Dispositif suivant la revendication 7, **caractérisé en ce que** le tube de remplissage (120) est supporté par au moins un corps de roulement (262) dans la zone de la première section (124), en aval du dispositif de soudage ou de scellement (112).

9. Dispositif suivant l'une des revendications précédentes, **caractérisé par** un entraînement (180) pour la rotation du tube de remplissage (120) autour du premier axe longitudinal (132), avec un moteur d'entraînement (182), un élément de transmission raccordé à la première section (124), et un second élément de transmission couplé à un moteur d'entraînement (182).

10. Dispositif suivant l'une des revendications précédentes, **caractérisé par** une manette (190, 194, 230, 240) pour la rotation du tube de remplissage (120) autour du premier axe longitudinal (132).
